# EUROPÄISCHE PATENTSCHRIFT

(11) **EP 1 614 397 B1**
(45) Veröffentlichungstag und Bekanntmachung des Hinweises auf die Patenterteilung: **17.04.2019**
(21) Anmeldenummer: 05106163.8
(22) Anmeldetag: 07.07.2005
(51) Int. Cl.: A61C 13/00

(54) **Verfahren zur Konstruktion der Oberfläche eines aus dreidimensionalen Daten bestehenden Zahnersatzteils**
Procedure for the production of the surface of a as 3D data available dental restoration.
Procédure pour la production de la surface d'une reconstruction dentaire consistante de saisies tridimensionnelles

(30) Priorität: 08.07.2004 DE 102004038136
(43) Veröffentlichungstag der Anmeldung: 11.01.2006
(60) Teilanmeldung: 19154842.9
(73) Patentinhaber: Sirona Dental Systems GmbH, 64625 Bensheim (DE)
(72) Erfinder: Orth, Ulrich, 64686, Lautertal (DE); Wedler, Volker, 69493, Hirschberg (DE); Willers, Ulf, 64295, Darmstadt (DE)
(74) Vertreter: Sommer, Peter

(56) Entgegenhaltungen:
- EP-A- 1 252 867
- EP-A1- 0 565 174
- DE-A1- 19 944 130
- US-B1- 6 174 168

## Beschreibung

### Technisches Gebiet

Die Erfindung betrifft ein Verfahren zur Konstruktion der Oberfläche eines aus dreidimensionalen Daten bestehenden Zahnersatzteils, wobei das Zahnersatzteil ein Veneer ist.

Für die Herstellung von ästhetischen und funktionalen Zahnrestaurationen ist es erforderlich, die direkte beziehungsweise spiegelbildliche Kopie einer oder mehrerer Zahnoberflächen zu erzeugen. Im Frontzahnbereich sollen die Labialflächen symmetrisch sein, damit ein ästhetischer Gesamteindruck entsteht. Im Seitenzahnbereich ist die Okklusion des entsprechenden Zahns der Gegenseite als Vorlage für die Kaufläche der Restauration geeignet.

### Stand der Technik

Mit bislang verwendeten Konstruktionsverfahren kann die Zahnoberfläche vor der Präparation oder eine künstlich durch Aufwachsen erzeugte Oberfläche in die Oberfläche der Restauration übertragen werden. Die dreidimensionalen Daten werden hierfür teilweise kopiert.

Bei der manuellen Erstellung hat der Zahntechniker im Frontzahnbereich versucht, die Labialfläche möglichst gut an den kontralateralen Zahn anzupassen. Dies gelingt mehr oder weniger gut, aber niemals exakt. Im Seitenzahnbereich orientiert sich der Zahntechniker an der Morphologie des Gebisses, auch am contralateralen Zahn. Es bleibt jedoch seinem manuellen Geschick überlassen, wesentliche Merkmale zu erfassen und zu berücksichtigen.

EP 1252867 A1 offenbart ein Verfahren, bei dem ein gesamtes Zahnmodell aus einer Zahnbibliothek ausgewählt wird, wobei anschließend eine Modellierung dieses Zahnmodells mittels eines manuellen virtuellen Werkzeugs zur Anpassung an die Präparation erfolgt und unter Verwendung eines Computers die aproximalen Kontakte zu den Nachbarzähnen und zu den Gegenzähnen automatisch angepasst werden.

DE19944130A1 offenbart ein Verfahren zur Konstruktion der Oberfläche eines aus dreidimensionalen Daten bestehenden Zahnersatzteils, z.B. eines Veneers. Mit Hilfe eines CAD-Datensatzes inklusiver optischer Eigenschaften des Materialblocks sowie CAD-Daten inklusiver optischer Eigenschaften des Zahnersatzteils kann eine virtuelle Positionierung des Zahnersatzteils im Materialblock durchgeführt werden, und dieses Zahnersatzteil dann gefertigt werden.

### Offenbarung der Erfindung

Das Verfahren nach Anspruch 1 gemäß der Erfindung zur Konstruktion der Oberfläche einer aus dreidimensionalen Daten bestehenden Zahnersatzteils besteht darin, dass dreidimensionale Daten einer Zahnoberfläche eines gespeicherten Zahns als Teil der Oberfläche des herzustellenden Zahnersatzteils verwendet werden, wozu die Zahnoberfläche in ihrer Ausdehnung zunächst bestimmt wird und danach im Bereich einer als dreidimensionale Daten vorliegenden Präparationsstelle angeordnet wird. Anschließend wird die Lage der digitalen Zahnoberfläche an der Präparationsstelle in mindestens einer Raumachse und/oder einer Drehrichtung bestimmt, wobei eine Anordnung der Zahnoberfläche an die Präparationsstelle stattfindet. Ausgehend von der Anordnung der Zahnoberfläche zu der Präparationsstelle findet die Konstruktion des Zahnersatzteils unter Verwendung der Daten der Präparationsstelle einerseits und der Zahnoberfläche andererseits statt, wobei eine rechnerische Anpassung der Grenzen der einzufügenden Zahnoberfläche an die Oberfläche der Präparationsstelle erfolgt. Die Zahnoberfläche ist dabei eine Labialfläche eines Frontzahns oder eine Kaufläche eines Seitenzahns ist.

Das Zahnersatzteil ist in Form digitaler Daten vorhanden und ist so dargestellt, dass es mit CAD-Werkzeugen bearbeitet werden kann. Dadurch ist es möglich, das Zahnersatzteil mit einer Feinstruktur von Erhebungen und Vertiefungen zu versehen und dem Zahnersatzteil so ein natürlicheres Aussehen zu verleihen.

Auch der Zahn liegt in Form von dreidimensionalen Daten vor, wobei es ausreichend sein kann, nur Teile des Zahns bereitzuhalten.

In dem Fall, wo noch kein Zahnersatzteil konstruiert wurde, findet eine Anordnung der Zahnoberfläche an die Präparationsstelle selbst statt, was im Ausführungsbeispiel beschrieben ist. In diesem Fall wird nicht ein bereits als 3D-Datensatz vorhandenes Zahnersatzteil mit einer neuen Oberfläche versehen, sondern ausgehend von der Anordnung der Oberfläche zu der Präparationsstelle findet eine Konstruktion des Zahnersatzteils mittelbar unter Verwendung der Daten der Präparationsstelle einerseits und der Oberfläche andererseits statt. Letzteres ist im Ausführungsbeispiel erläutert.

Vorteilhafterweise erfolgt eine rechnerische Anpassung der Grenzen der einzufügenden Zahnoberfläche an die Oberfläche des Zahnersatzteils oder der Präpartionsstelle. Durch Interpolation zwischen der Zahnoberfläche und der Oberfläche des Zahnersatzteils wird ein glatter Übergang der Oberflächen ineinander erzeugt.

Gemäß einer vorteilhaften Weiterbildung der Erfindung ist die Lage der digitalen Zahnoberfläche in dem Zahnersatzteil oder an der Präparationsstelle frei bestimmbar. Dadurch ist eine freie Ausrichtung möglich, ohne dass eine rechnerische Korrelation der Daten den Platz zwangsweise festlegt.

Wenn die digitale Zahnoberfläche vor dem Einfügen gespiegelt wird, kann im Falle des Fehlens einer originalen Oberfläche auf eine Oberfläche zurückgegriffen werden, die spiegelsymmetrisch ist.

Insbesondere eignet sich dazu die von einem kontralateralen Zahn erzeugte einzufügende Oberfläche. Bei einem Zahn im Frontbereich kann die sichtbare Vorderfläche verwendet werden.

Bei einem Zahn im Seitenzahnbereich kann vorteilhafterweise die Kaufläche des kontralateralen Zahns spiegelbildlich verwendet werden.

Vorteilhafterweise erfolgt vor dem rechnerischen Anpassen mit der vorhandenen digitalen Zahnstruktur eine Größenanpassung der einzufügenden Oberfläche an die für das Zahnersatzteil oder für die Präparationsstelle geeigneten Abmessungen. Dadurch ist es möglich, aus Zahnbibliotheken stammende Zähne als Vorlage für eine Zahnoberfläche zu verwenden.

Erfindungsgemäß ist dieses Verfahren für die Konstruktion eines Veneers.

Aus einem erfindungsgemäß konstruierten digitalen Zahnersatzteil lassen sich dann auf herkämmlichen dentalen Bearbeitungsmaschinen gegenständliche Zahnersatzteile herstellen.

Ein weiterer Gegenstand gemäß Anspruch 7 ist eine Vorrichtung zur Konstruktion der Oberfläche eines aus dreidimensionalen Daten bestehenden Zahnersatzteils, wobei Mittel zum Auswählen der dreidimensionale Daten einer Zahnoberfläche eines digital gespeicherten Zahns als Teil der Oberfläche des herzustellenden Zahnersatzteils und zur Anordnung der Zahnoberfläche im Bereich einer als dreidimensionale Daten vorliegenden Präparationsstelle vorhanden sind und dass Mittel zur Anpassung des ausgewählten Teils der Zahnoberfläche zumindest bezüglich der Orientierung zur Präparationsstelle vorgesehen sind, wobei Mittel zur rechnerischen Anpassung der Grenzen der einzufügenden Zahnoberfläche an die Oberfläche der Präparationsstelle vorgesehen sind, wobei die Konstruktion des Zahnersatzteils ausgehend von der Anordnung der Zahnoberfläche zu der Präparationsstelle unter Verwendung der Daten der Präparationsstelle einerseits und der Zahnoberfläche andererseits ausführbar ist. Die Zahnoberfläche ist dabei eine Labialfläche eines Frontzahns oder eine Kaufläche eines Seitenzahns.

Vorteilhafterweise sind die Mittel zur Anpassung des ausgewählten Teils der Zahnoberfläche zumindest bezüglich einer der Eigenschaften Größe und Verlauf der Begrenzungslinie vorgesehen.

Weiterhin können Mittel zur rechnerischen Anpassung der Grenzen der einzufügenden Zahnoberfläche an die Oberfläche des Zahnersatzteils vorgesehen sind.

Besonders vorteilhaft ist es, wenn Mittel zur Spiegelung einzufügenden Zahnoberfläche vorgesehen sind.

### Kurze Beschreibung der Zeichnungen

Das erfindungsgemäße Verfahren wird anhand der Zeichnung erläutert. Es zeigen:
- Fig. 1: die Vermessung einer Präparationsstelle unter Verwendung einer Intraoralkamera, die
- Fig. 2A-C: die digitale Darstellung eines zu restaurierenden Zahns, des Nachbarzahns und eines Vorlagezahns im Frontzahnbereich,
- Fig. 3: die eingezeichnete Präparationsgrenze,
- Fig. 4: die Auswahl einer zu kopierende Zahnoberfläche aus einem kontralateralen Frontzahn des zu restaurierenden Zahns,
- Fig. 5: die Positionierung der gespiegelten Zahnoberfläche in die Präparationsstelle an dem zu restaurierenden Zahn,
- Fig. 6: die als Vorlage verwendete Zahnoberfläche mit eingearbeiteten Reflexionen,
- Fig. 7: die eingefügte Kopierfläche in der endgültigen Position vor der Anpassung der Begrenzungslinie der Kopierfläche,
- Fig. 8 A, B: die Anpassung der Begrenzungslinie der Kopierfläche an das konstruierte Zahnersatzteil,
- Fig. 9 A,B: die Verschmelzung und Korrektur der Kopierfläche mit dem konstruierten Zahnersatzteil,
- Fig. 10A: das fertig konstruierte Zahnersatzteil in einer Vorderansicht, die
- Fig. 10B: das fertig konstruierte Zahnersatzteil aus Fig. 10A in einer Rückansicht. Ausführungsbeispiel der Erfindung

Die Herstellung eines Veneers wird als erfindungsgemäßes Verfahren beschrieben. Eine CAD-Software für die Erstellung von Zahnersatzteilen ermöglicht dazu im Konstruktionsmodus das Kopieren und gegebenenfalls Spiegeln einer beliebigen Zahnoberfläche auf ein Zahnersatzteil, auch bezeichnet als Rekonstruktionskörper. Unter Verwendung der Funktionen Positionierung, Drehung, Größenanpassung sowie einer Bearbeitungsfunktion kann der Benutzer die "Schale" der kopierten Oberfläche mit dem Restaurationskörper verbinden. Vorhandene Zahnkonstrukturen können somit bei geringem Aufwand für die Anpassung der Oberfläche übertragen werden.

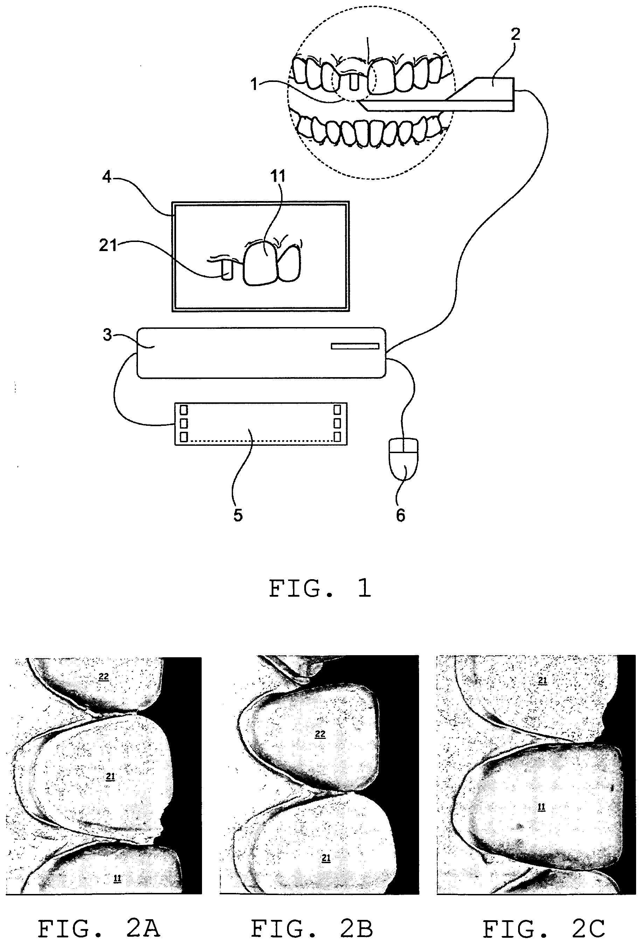

In einem ersten Schritt, dargestellt in Fig. 1, wird die Präparationsstelle 1 unter Verwendung einer Intraoralkamera 2 vermessen und anhand der von einem Rechner 3 ausgewerteten Messdaten wird ein dreidimensionaler Datensatz der Präparationsstelle 1 erzeugt und auf einer Anzeigeeinheit 4 dargestellt, hier der wiederherzustellende Frontzahn 21. Darüber hinaus sind Eingabemittel in Form einer Tastatur 5 und einer Computermaus 6 vorgesehen.

Im vorliegenden Fall ist es zweckmäßig, die Vermessung auf einen Bereich auszudehnen, der über das reine Präparationsgebiet hinausgeht. Dies kann beispielsweise durch weitere Messaufnahmen der Nachbarzähne 11 erfolgen. Die Aufnahme des Zahns 21 erfolgte aus labialer Richtung.

In einer weiteren Aufnahme wird die Zahnoberfläche vermessen, die für die Erstellung der Restauration verwendet werden soll. Dies erfolgt typischerweise aus der gleichen Ansicht wie die Aufnahme der Präparation.

Es ist ausreichend, im vorliegenden Fall die Präparation im Bereich des wiederherzustellenden Frontzahns 21 sowie der Nachbarzähne 11 und 22 zu verwenden, da in diesen in Fig. 2A, 2B und 2C gezeigten Aufnahmen auch die Zahnoberfläche des Zahnes 11 abgebildet ist, die als Oberfläche der Restauration verwendet werden soll - dies gilt jedoch nur für den Bereich der inneren Frontzähne. Für weiter außen liegende Zähne wären viele Kameraaufnahmen notwendig, um dieses Verfahren durchzuführen. Hier wird vorteilhafterweise der präparierte Zahn mit seinen Nachbarzähnen in einer Aufnahmegruppe und die zu kopierende Zahnoberfläche in einer anderen Aufnahmegruppe ausgeführt.

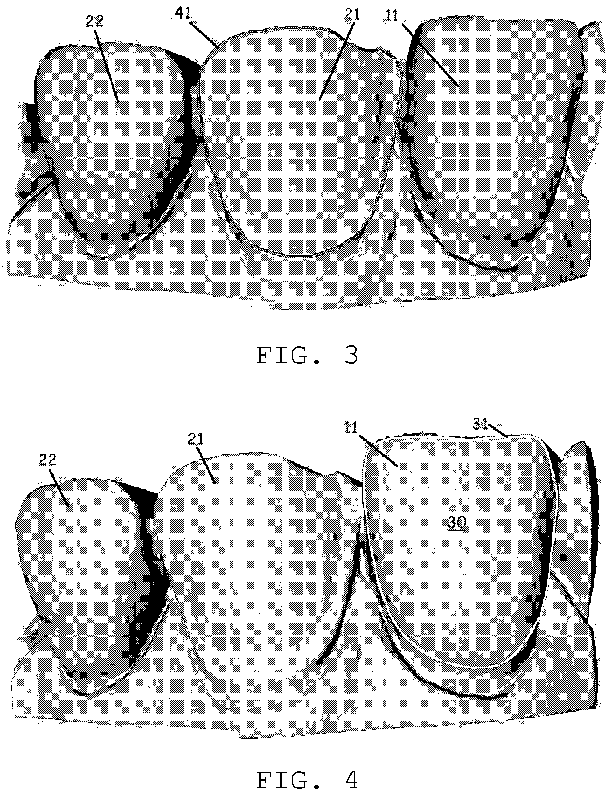

Die Präparationsgrenze 41 des wieder zu erstellenden Frontzahns 21 wird eingezeichnet, siehe Fig. 3. Dies geschieht unter Verwendung der Computermaus 6, kann aber auch beispielsweise mit einem Lichtgriffel oder anderen Eingabegeräten erfolgen. Auch eine automatische Erkennung der Präparationsgrenze 41 kann vorgesehen sein.

Aus dem kontralateralen Frontzahn 11 wird eine zu kopierende Zahnoberfläche 30 ausgewählt, in dem mit den Eingabemitteln eine Bereichsgrenze 31 bestimmt wird, Fig. 4. Die Auswahl der Oberfläche 30 kann überprüft werden, indem der Frontzahn 11 aus verschiedenen Richtungen dargestellt wird. Zur Übertragung der ausgewählten Oberfläche 30 des Frontzahns 11 auf den herzustellenden Frontzahn 21 ist es erforderlich, die ausgewählte Zahnoberfläche 30 zu spiegeln, wofür ein Auswahldialog gezeigt wird.

Für den Fall, dass keine Okklusionsaufnahmen erstellt wurden, ist die Abfrage einer Spiegelung der ausgewählten Oberfläche nicht erforderlich, da hier nur der kontralaterale Zahn verwendet werden kann und somit bereits feststeht, dass gespiegelt werden muss.

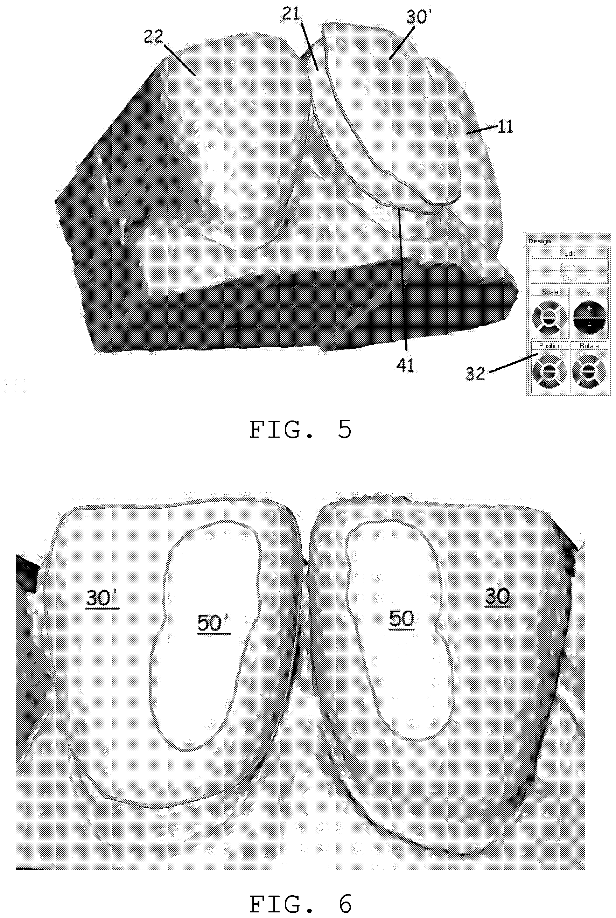

Nach der Spiegelung der Zahnoberfläche 30, die so ausgestaltet ist, dass eine rechte Handfläche als linke Handfläche dargestellt wird, wird die gespiegelte Zahnoberfläche 30' in die Präparationsstelle 1 eingeblendet und ist dort über Eingabemittel 32 z.B. in Form von programmierten Schaltflächen an dem Zahn 21 positionierbar, d.h. in alle Raumrichtungen verschiebbar und drehbar, Fig. 5. Darüber hinaus kann die Größe verändert werden, so dass eine Anpassung an den Nachbarzahn 22 möglich ist.

Im Ausführungsbeispiel sind in die als Vorlage verwendete Zahnoberfläche 30 Reflexionen eingearbeitet, welche zum Beispiel als ein zusammenhängendes Gebiet 50 identifizierbar sind, dargestellt in Fig. 6. Dieses Gebiet 50 kann auch in der kopierten Zahnoberfläche 30' als Gebiet 50' widergegeben werden, so dass eine Ausrichtung der beiden Gebiete 50, 50' zueinander möglich ist, und zwar sowohl bezüglich der Lage in horizontaler und vertikaler Richtung und der Schräglage als auch bezüglich der Ausdehnung, also der Größe.

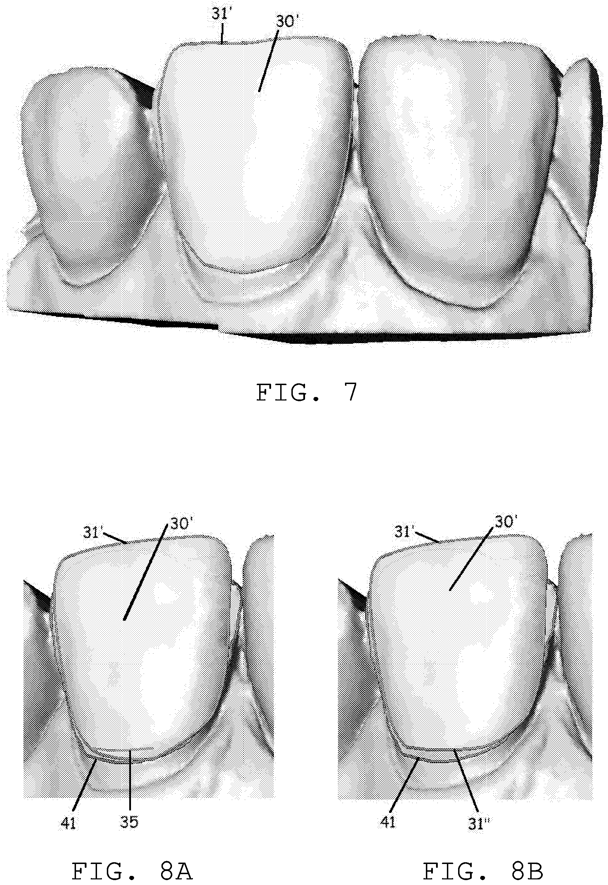

In Fig. 7 ist die eingefügte Oberfläche 30' in der endgültigen Position am berechneten Zahnersatzteil dargestellt, so dass eine Anpassung der Begrenzungslinie 31' der Oberfläche 30' unter Berücksichtigung der Präparationsgrenze möglich ist.

Dies geschieht über die üblichen Bearbeitungswerkzeuge, siehe Fig. 8A, 8B, wobei die Begrenzung 31' der Kopierfläche 30' durch Neuzeichnen einen Linienabschnitts 35 verändert wird. Dadurch wird die Kopierfläche 30' lokal kleiner bzw. größer gemacht. Zu Kontrollzwecken ist die Präparationsgrenze 41 dargestellt.

Nach dieser Anpassung kommt es zu einer bildlichen Verschmelzung der erstellten Oberfläche 30" mit der Präparation 21, wodurch das herzustellende Zahnersatzteil gebildet wird. Dabei werden die Oberflächen der Präparation 21 zur Bildung der der Präparation zugewandten Oberfläche des Zahnersatzteils verwandt und es kommt zu einer rechnerischen Ergänzung, so dass anschließend ein erster Datensatz für ein noch zu überarbeitendes Zahnersatzteil vorliegt.

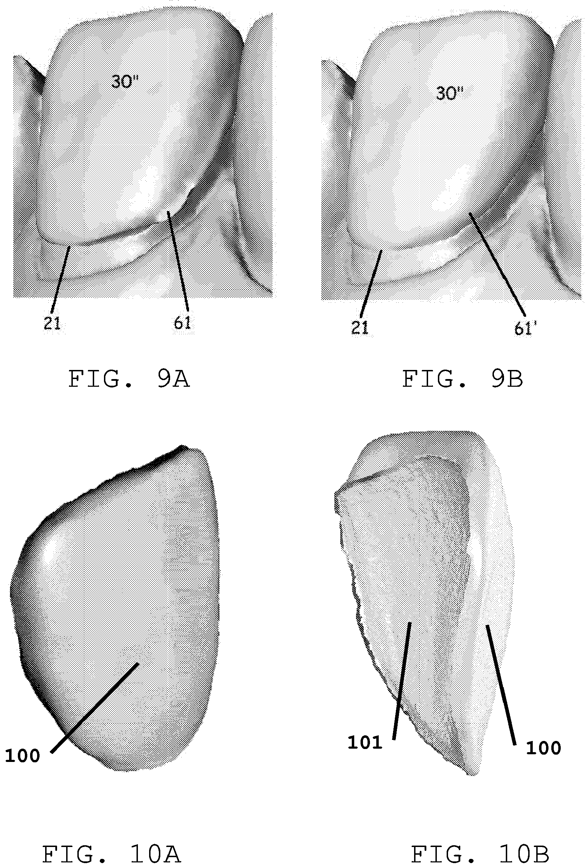

In Fig. 9A ist ein angezeigter Vorschlag des mit der Präparation 21 verbundenen Zahnersatzteils dargestellt. Dieser Vorschlag kann wiederum bearbeitet werden, um eine Anpassung der Übergänge 61 zu erzielen. Die Änderung kann im gesamten Bereich zwischen der Oberfläche 30" und der Präparation 21 notwendig sein oder nur in einem Teilbereich davon. Das Ergebnis dieser Anpassung ist in Fig. 9B abgebildet, wo der Übergang 61' deutlich glatter verläuft.

In Fig. 10A ist das fertig konstruierte Zahnersatzteil in Form eines Veneers 100 aus labialer Richtung gesehen dargestellt, in Fig. 10B ist die Rückseite 101 des Zahnersatzteils aus bukkaler Richtung gesehen dargestellt. Das Zahnersatzteil wird mit dieser Rückseite 101 am Frontzahn befestigt.

Die nicht-erfindungsgemäße Konstruktion einer Krone erfordert eine Aufnahme aus Okklusalrichtung und die Festlegung der Okklusalfläche, die auch durch Kopieren gewonnen werden kann, und anschließend die Ergänzung des Bereichs von der Okklusalfläche bis zur Präparationsgrenze. Damit ist das herzustellende Zahnersatzteil in seinen Außenkonturen bestimmt, die Innenkontur wird durch den vorhandenen Zahnstumpf vorgegeben, so dass insgesamt die Form des Zahnersatzteils bestimmt ist. Dieses konstruierte Zahnersatzteil kann dann mit üblichen Verfahren hergestellt werden.

Mit diesem Konstruktionsverfahren wird es dem Benutzer möglicht, eine beliebige, auch selbst definierte Zahnoberfläche wie beispielsweise die Labialfläche von Frontzähnen oder die Kaufläche von Seitenzähnen sowohl direkt als auch spiegelbildlich zu kopieren und als Oberfläche für eine Restauration zu verwenden.

Dabei kann der Benutzer die Originaloberfläche des Zahns vor der Präparation verwenden, wobei hier im Gegensatz zu den bekannten Korrelationsverfahren die Lage der Zahnoberfläche frei bestimmbar ist und damit Fehlstellungen unter Beibehaltung der Oberflächendetails korrigiert werden können.

Weiterhin kann als Oberfläche der Restauration der kontralaterale Zahn verwendet werden. Damit kann der Benutzer eine höchstmögliche Symmetrie insbesondere im Frontzahnbereich erzeugen. Im Seitenzahnbereich ist die Kaufläche des kontralateralen Zahns die geeignete Vorlage für die Restauration, da diese Kaufläche am besten zu den anderen Zähnen des Kiefers und damit auch in den Gegenkiefer passt.

Darüber hinaus ist es möglich, beliebige Vorlagen zu verwenden, um beispielsweise bei der Versorgung des gesamten Frontzahnbereichs auch dann eine höchstmögliche Symmetrie zu erzeugen, wenn nicht die originalen Zahnoberflächen verwendet werden.

So kann zum Beispiel der Frontzahn der rechten Seite unmittelbar und der Frontzahn der linken Seiten mit einer gespiegelten Vorlage versorgt werden, wobei durch eine Skalierung der kopierten Flächen eine eventuell notwendige Größenanpassung erfolgt.

Damit wird erstmals die Möglichkeit geboten, ohne großen manuellen oder künstlerischen Aufwand ästhetische und funktionelle Restaurationen besonders im Frontzahnbereich zu erstellen, die alle Anforderungen bezüglich der Symmetrie erfüllen.

## Patentansprüche

1. Verfahren zur Konstruktion der Oberfläche eines aus dreidimensionalen Daten bestehenden Zahnersatzteils, wobei dreidimensionale Daten einer Zahnoberfläche (30) eines gespeicherten Zahns (11) als Teil der Oberfläche des herzustellenden Zahnersatzteils verwendet werden, wozu die Zahnoberfläche (30) in ihrer Ausdehnung zunächst bestimmt wird und danach im Bereich einer als dreidimensionale Daten vorliegenden Präparationsstelle (1; 21) angeordnet wird, und wobei die Lage der digitalen Zahnoberfläche (30) an der Präparationsstelle (1; 21) in mindestens einer Raumachse und/oder einer Drehrichtung bestimmbar ist, wobei eine Anordnung der Zahnoberfläche (30) an die Präparationsstelle (1, 21) stattfindet, wobei ausgehend von der Anordnung der Zahnoberfläche zu der Präparationsstelle die Konstruktion des Zahnersatzteils unter Verwendung der Daten der Präparationsstelle einerseits und der Zahnoberfläche (30) andererseits stattfindet, wobei eine rechnerische Anpassung der Grenzen der einzufügenden Zahnoberfläche an die Oberfläche der Präparationsstelle erfolgt, wobei die Zahnoberfläche (30) eine Labialfläche eines Frontzahns ist, die aus dem gespeicherten Zahn (11) mit Mitteln zum Auswählen ausgewählt wird, wobei das Zahnersatzteil ein Veneer ist.

2. Verfahren nach Anspruch 1, **dadurch gekennzeichnet**, die Lage der digitalen Zahnoberfläche (30) in der Präparationsstelle (1; 21) bezüglich der Raumachsen und/oder der Drehrichtungen frei bestimmbar ist.

3. Verfahren nach Anspruch 1 oder 2, **dadurch gekennzeichnet, dass** die digitale Zahnoberfläche (30) vor dem Einfügen gespiegelt wird.

4. Verfahren nach einem der Ansprüche 1 bis 3, **dadurch gekennzeichnet, dass** die einzufügende Zahnoberfläche (30', 30") von einem kontralateralen Zahn (11) erzeugt ist.

5. Verfahren nach einem der Ansprüche 1 bis 4, **dadurch gekennzeichnet, dass** die Kaufläche eines kontralateralen Zahns im Seitenzahnbereich spiegelbildlich verwendet wird.

6. Verfahren nach einem der Ansprüche 1 bis 5, **dadurch gekennzeichnet, dass** eine Größenanpassung der einzufügenden Zahnoberfläche (30') erfolgt.

7. Vorrichtung zur Konstruktion der Oberfläche eines aus dreidimensionalen Daten bestehenden Zahnersatzteils, wobei Mittel zum Auswählen der dreidimensionale Daten einer Zahnoberfläche eines digital gespeicherten Zahns als Teil der Oberfläche des herzustellenden Zahnersatzteils und zur Anordnung der Zahnoberfläche im Bereich einer als dreidimensionale Daten vorliegenden Präparationsstelle vorhanden sind und wobei Mittel zur Anpassung des ausgewählten Teils der Zahnoberfläche zumindest bezüglich der Orientierung zur Präparationsstelle vorgesehen sind, wobei Mittel zur rechnerischen Anpassung der Grenzen der einzufügenden Zahnoberfläche an die Oberfläche der Präparationsstelle vorgesehen sind, wobei die Konstruktion des Zahnersatzteils ausgehend von der Anordnung der Zahnoberfläche zu der Präparationsstelle unter Verwendung der Daten der Präparationsstelle einerseits und der Zahnoberfläche (30) andererseits ausführbar ist, wobei die Zahnoberfläche (30) eine Labialfläche eines Frontzahns oder eine Kaufläche eines Seitenzahns ist, die aus dem gespeicherten Zahn (11) mit Mitteln zum Auswählen auswählbar ist, wobei das Zahnersatzteil ein Veneer ist.

8. Vorrichtung nach Anspruch 7, **dadurch gekennzeichnet, dass** Mittel zur Anpassung des ausgewählten Teils der Zahnoberfläche zumindest bezüglich einer der Eigenschaften Größe und Verlauf der Begrenzungslinie vorgesehen sind.

9. Vorrichtung nach Anspruch 7 oder 8, **dadurch gekennzeichnet, dass** Mittel zur Spiegelung der einzufügenden Zahnoberfläche vorgesehen sind.

## Claims

1. Method for constructing the surface of a tooth replacement part consisting of three-dimensional data, wherein three-dimensional data of a tooth surface (30) of a stored tooth (11) are used as part of the surface of the tooth replacement part to be produced, for which the tooth surface (30) is first defined in terms of its dimension and then arranged in the region of a preparation site (1; 21) which exists in the form of three-dimensional data, and wherein the position of the digital tooth surface (30) at the preparation site (1; 21) can be defined by at least one spatial axis and/or one direction of rotation, wherein an arrangement of the tooth surface (30) on the preparation site (1; 21) takes place, wherein, based on the arrangement of the tooth surface relative to the preparation site, the construction of the tooth replacement part takes place using the data of the preparation site on the one hand and the tooth surface (30) on the other hand, wherein a mathematical adjustment of the boundaries of the tooth surface to be inserted to the surface of the preparation site takes place, wherein the tooth surface (30) is a labial surface of a front which is selected from the stored tooth (11) with means for selecting, wherein the tooth replacement part is a veneer.

2. Method according to Claim 1, **characterized in that**, with respect to the spatial axes and/or the directions of rotation, the position of the digital tooth surface (30) in the preparation site (1; 21) can be freely defined.

3. Method according to Claim 1 or 2, **characterized in that** the digital tooth surface (30) is mirrored prior to insertion.

4. Method according to any one of Claims 1 to 3, **characterized in that** the tooth surface (30', 30") to be inserted is produced from a contralateral tooth (11).

5. Method according to any one of Claims 1 to 4, **characterized in that** a mirror image of the occlusal surface of a contralateral tooth in the side tooth region is used.

6. Method according to any one of Claims 1 to 5, **characterized in that** a size adjustment of the tooth surface (30') to be inserted takes place.

7. Apparatus for constructing the surface of a tooth replacement part consisting of three-dimensional data, wherein means for selecting the three-dimensional data of a tooth surface of a digitally stored tooth as part of the surface of the tooth replacement part to be produced and for arranging the tooth surface in the region of a preparation site which exists in the form of three-dimensional data are present, and wherein means for adjusting the selected part of the tooth surface at least with respect to the orientation relative to the preparation site are provided, wherein means for the mathematical adjustment of the boundaries of the tooth surface to be inserted to the surface of the preparation site are provided, wherein, based on the arrangement of the tooth surface relative to the preparation site, the construction of the tooth replacement part can be carried out using the data of the preparation site on the one hand and the tooth surface (30) on the other hand, wherein the tooth surface (30) is a labial surface of a front tooth or an occlusal surface of a side tooth which can be selected from the stored tooth (11) with means for selecting, wherein the tooth replacement part is a veneer.

8. Apparatus according to Claim 7, **characterized in that** means for adjusting the selected part of the tooth surface at least with respect to one of the properties size and profile of the boundary line are provided.

9. Apparatus according to Claim 7 or 8, **characterized in that** means for mirroring the tooth surface to be inserted are provided.

## Revendications

1. Procédé de construction d'une surface d'une prothèse dentaire composée de données tridimensionnelles, les données tridimensionnelles d'une surface de dent (30) d'une dent enregistrée (11) étant utilisées comme une partie de la surface de la prothèse dentaire à créer, où la surface de dent (30) est d'abord déterminée dans son étendue et ensuite disposée dans la zone d'un emplacement de préparation (1 ; 21) disponible sous forme de données tridimensionnelles, et la position de la surface de dent (30) numérique dans l'emplacement de préparation (1 ; 21) pouvant être définie dans au moins un axe spatial et/ou dans une direction rotationnelle, un agencement de la surface de dent (30) dans l'emplacement de préparation (1 ; 21) étant effectué, la construction de la prothèse dentaire étant effectuée sur la base de l'agencement de la surface de dent dans l'emplacement de préparation, en utilisant les données de l'emplacement de préparation d'une part, et celles de la surface de dent (30) d'autre part, un ajustement par calcul des limites de la surface de dent à insérer dans la surface de l'emplacement de préparation étant effectué, la surface de dent (30) étant une surface labiale d'une dent antérieure, qui est sélectionnée dans la dent enregistrée (11) avec des moyens de sélection, la prothèse dentaire étant une facette.

2. Procédé selon la revendication 1, **caractérisé en ce que** la position de la surface de dent numérique (30) dans l'emplacement de préparation (1 ; 21) par rapport aux axes spatiaux et/ou aux directions rotationnelles peut être librement définie.

3. Procédé selon la revendication 1 ou 2, **caractérisé en ce que** la surface de dent (30) numérique est inversée avant l'insertion.

4. Procédé selon l'une quelconque des revendications 1 à 3, **caractérisé en ce que** la surface de dent à insérer (30', 30") est produite à partir d'une dent (11) contre-latérale.

5. Procédé selon l'une quelconque des revendications 1 à 4, **caractérisé en ce que** la surface de mastication d'une dent contre-latérale dans la zone des dents latérales est utilisée inversée.

6. Procédé selon l'une quelconque des revendications 1 à 5, **caractérisé en ce qu'**une adaptation de la taille de la surface de dent (30') à insérer est effectuée.

7. Dispositif de construction de la surface d'une prothèse dentaire composée de données tridimensionnelles, des moyens pour la sélection des données tridimensionnelles d'une surface de dent d'une dent enregistrée numériquement étant disponibles en tant que partie de la surface de la prothèse dentaire à fabriquer et pour l'agencement de la surface de dent dans la zone d'un emplacement de préparation disponible sous forme de données tridimensionnelles et des moyens étant prévus pour l'ajustement de la partie sélectionnée de la surface de dent au moins concernant l'orientation par rapport à l'emplacement de préparation, des moyens étant prévus pour l'ajustement par calcul des limites de la surface de dent à insérer dans la surface de l'emplacement de préparation, la construction de la prothèse dentaire sur la base de l'agencement de la surface de dent dans l'emplacement de préparation en utilisant les données de l'emplacement de préparation d'une part, et celles de la surface de dent (30) d'autre part, étant réalisable, la surface de dent (30) étant une surface labiale d'une dent antérieure ou une surface de mastication d'une dent latérale, qui est sélectionnée dans la dent enregistrée (11) avec des moyens de sélection, la prothèse dentaire étant une facette.

8. Dispositif selon la revendication 7, **caractérisé en ce que** des moyens sont prévus pour l'ajustement de la partie sélectionnée de la surface de dent au moins en ce qui concerne une des caractéristiques taille et étendue de la ligne de délimitation.

9. Dispositif selon la revendication 7 ou 8, **caractérisé en ce que** des moyens sont prévus pour l'inversion de la surface de dent à insérer.
